# EUROPÄISCHE PATENTSCHRIFT

(11) **EP 2 580 408 B1**
(45) Veröffentlichungstag und Bekanntmachung des Hinweises auf die Patenterteilung: **19.07.2017**
(21) Anmeldenummer: 11719508.1
(22) Anmeldetag: 04.05.2011
(51) Int. Cl.: F03D 13/20, E04H 12/16, E04H 12/08, B24B 7/22, B24B 7/16, B24B 27/00, F03D 1/00, E04H 12/12

(54) **TURM MIT EINEM ADAPTERSTÜCK SOWIE VERFAHREN ZUR HERSTELLUNG EINES TURMS MIT EINEM ADAPTERSTÜCK**
TOWER COMPRISING AN ADAPTER PIECE AND METHOD FOR PRODUCING A TOWER COMPRISING AN ADAPTER PIECE
MÂT COMPRENANT UNE PIÈCE ADAPTATRICE ET PROCÉDÉ DE FABRICATION D'UN MÂT COMPRENANT UNE PIÈCE ADAPTATRICE

(30) Priorität: 26.08.2010 DE 102010039796; 14.06.2010 DE 102010030047
(43) Veröffentlichungstag der Anmeldung: 17.04.2013
(73) Patentinhaber: Max Bögl Stiftung & Co. KG, 92369 Sengenthal (DE)
(72) Erfinder: BÖGL, Stefan, 92369 Sengenthal (DE); HIERL, Martin, 92318 Neumarkt (DE); KNITL, Josef, 92342 Freystadt (DE)
(74) Vertreter: Bergmeier, Werner
(86) Internationale Anmeldenummer: PCT/EP2011/057088
(87) Internationale Veröffentlichungsnummer: WO 2011/157476

(56) Entgegenhaltungen:
- EP-A2- 0 960 986
- EP-A2- 2 009 202
- EP-B1- 1 654 460
- WO-A1-03/069099
- WO-A2-2010/026098
- DE-B3- 10 230 273
- JP-A- 9 248 745

## Beschreibung

Die vorliegende Erfindung betrifft einen Turm, insbesondere einen Turm für eine Windenergieanlage, mit einem unteren rohrförmigen Turmabschnitt aus Beton und einem oberen rohrförmigen Turmabschnitt aus Stahl, sowie mit einem Adapterstück zur Verbindung der beiden Turmabschnitte. Weiterhin betrifft die Erfindung ein Verfahren zur Herstellung eines Turms.

Türme für Windenergieanlagen werden insbesondere bei sehr hohen Türmen sehr häufig als sogenannte Hybridtürme gebaut, bei welchen ein unterer Turmabschnitt aus Beton besteht, und ein oberer Turmabschnitt aus Stahl auf den Turmabschnitt aus Beton aufgesetzt ist. Durch diese Hybridbauweise können auch Türme mit einer großen Nabenhöhe, welche in reiner Stahlbauweise eine sehr große Wandstärke am Fuß erfordern würden, in vergleichsweise einfacher Weise errichtet werden, da aus Transportgründen der Durchmesser eines Stahlrohrturmes begrenzt ist. Der Verbindung des Turmabschnitts aus Stahl mit dem Turmabschnitt aus Beton kommt hierbei eine erhebliche Bedeutung zu, da eine optimale Krafteinleitung in den Beton gewährleistet sein muss und Schädigungen des Betons durch eingeleitete Beanspruchungen vermieden werden müssen. Zur Verbindung des Stahlabschnitts mit dem Betonabschnitt sind im Stand der Technik verschiedene Möglichkeiten bekannt geworden.

Die WO 2010/026098 A2 beschreibt ein Adapterelement, um einen Stahlturm mit einem Turmabschnitt aus Beton zu verbinden. Das Adapterelement ist aus Stahl ausgeführt und kann einen Schraubflansch oder einen Spanngliederflansch beinhalten.

Die EP 1 654 460 B1 sieht vor, einen unteren Bereich des Turmabschnitts aus Stahl direkt in den Turmabschnitt aus Beton einzugießen. Der eingegossene Endbereich des Turmabschnitts aus Stahl weist hierzu Verankerungselemente auf, die radial von der Wand des Turmabschnitts abstehen. Es sind entlang der Höhe des eingegossenen Endbereichs mehrere Verankerungselemente vorgesehen, sodass die eingeleiteten Kräfte über den gesamten Einbettungsbereich verteilt werden.

Die DE 20 2006 009 554 U1 sieht ein spezielles Adapterelement aus Stahl vor, das im Wesentlichen ringförmig ausgebildet ist und bei dem auf der inneren Mantelfläche des ringförmigen Stahladapterelements wiederum sich in radialer Richtung erstreckende Ankerelemente angeordnet sind. Hierdurch soll eine direkte Ableitung von Zugkräften in den Betonkörper ohne Umlenkung ermöglicht werden.

Nachteilig bei den genannten Verbindungen des Stahlturms mit dem Betonturm ist es, dass bei Herstellung des Turmabschnitts aus Beton bereits der Stahlturm mit seinem speziell ausgebildeten Endbereich oder aber zumindest das speziell ausgebildete Adapterelement vorhanden sein muss, um es in den Turmabschnitt aus Beton eingießen zu können.

Die EP 2 009 202 A2 beschreibt ein Adapterelement, das als Kopfabschnitt eines Betonturms ausgeführt ist und im Wesentlichen aus Beton besteht. In den Kopfabschnitt ist eine Vielzahl von Hüllrohren einbetoniert, welche der Aufnahme von Ankerbolzen zur Verbindung des Turmabschnitts aus Stahl und des Turmabschnitts aus Beton dienen. Weiterhin ist an der Oberseite des Kopfabschnitts ein Lastverteilblech und an der Unterseite eine Ankerplatte einbetoniert. Der Kopfabschnitt ermöglicht eine zeitunabhängige Montage des Stahlturms auf den Betonturm. Es kann jedoch noch immer zu hohen Belastungen des Kopfabschnitts kommen.

Aufgabe der vorliegenden Erfindung ist es, einen Turm mit einem Adapterstück vorzuschlagen, wobei eine einfache und flexible Herstellung des Turms bei guter Krafteinleitung möglich ist. Weiterhin soll ein entsprechendes Verfahren vorgeschlagen werden.

Die Aufgabe wird gelöst mit den Merkmalen der unabhängigen Ansprüche.

Ein Turm, insbesondere für eine Windkraftanlage, weist einen unteren rohrförmigen Turmabschnitt aus Beton und einen oberen rohrförmigen Turmabschnitt aus Stahl auf. Weiterhin weist der Turm ein Adapterstück zur Verbindung der beiden Turmabschnitte auf. Erfindungsgemäß beinhaltet das Adapterstück ein ringförmiges Betonelement und ein Stahlelement, welches zumindest einen ringförmigen Flansch beinhaltet. Der Flansch bedeckt hierbei eine in Einbaulage obere Oberfläche des Betonelements vorzugsweise vollständig. Das erfindungsgemäße Adapterstück besteht somit aus Beton und aus Stahl, wobei das Stahlelement durch Vergießen des Betonelements mit dem Stahlelement über Kopf direkt mit dem Betonelement vergossen ist. Der ringförmige Flansch des Stahlelements ist hierbei vollständig und ohne Lufteinschlüsse untergossen. Bei einem Verfahren zur Herstellung eines Turms wird zur Herstellung des Adapterstücks zunächst ein Stahlelement mit einem ringförmigen Flansch vorgesehen, welches kopfüber in eine ringförmige Schalung eingelegt wird. Anschließend wird Beton in die Schalung eingebracht. Hierdurch kann das innere ringförmige Betonelement des Adapterstücks hergestellt werden. Der Beton wird hierbei direkt auf die Unterseite des Flansches aufgebracht, sodass bei dem fertigen Adapterelement der Flansch vollständig untergossen ist und eine gute Verbindung zwischen dem Betonelement und dem Stahlelement besteht.

Da das erfindungsgemäße Adapterstück ein Betonelement und ein Stahlelement enthält, kann dieses in einfacher Weise unabhängig von dem Turmabschnitt aus Stahl sowie dem Turmabschnitt aus Beton hergestellt werden und erst anschließend mit den beiden Turmabschnitten verbunden werden, da die kritische Verbindung zwischen Stahl und Beton durch das direkte Eingießen des Stahlelements in das Betonelement bewerkstelligt ist. Durch das Vergießen des Betonelements mit dem Stahlelement über Kopf kann erreicht werden, dass der ringförmige Flansch vollständig und im Wesentlichen ohne Lufteinschlüsse untergossen ist. Hierdurch wird direkt unter dem Flansch eine hohe, dichte Betongüte erzielt, sodass die hochbelastete Kontaktfläche zwischen Stahl und Beton für die Krafteinleitung und Kraftaufnahme der durch den Stahlturm übertragenen Kräfte besonders gut geeignet ist. Der Einsatz von Vergussmörtel ist hierbei nicht erforderlich. Das erfindungsgemäße Adapterstück ist hierdurch sowohl für Türme in Fertigteilbauweise wie für eine Fertigung am Einbauort geeignet. Zudem wird durch den Flansch des Stahlelements der Aufbau und die Montage des Turms vereinfacht, da dieser gleichzeitig der Verbindung mit dem oberen Turmabschnitt aus Stahl sowie der Aufnahme bzw. Festlegung von Spannelementen dienen kann und zudem weitere Funktionen erfüllen kann, wie im Folgenden noch beschrieben wird.

Nach einer vorteilhaften Weiterbildung der Erfindung weist das Adapterstück ein inneres ringförmiges Betonelement und ein äußeres ringförmiges Stahlelement auf, welches an seinem oberen Ende den ringförmigen Flansch beinhaltet. Durch das außenliegende ringförmige Stahlelement kann die Abdichtung zwischen dem Betonabschnitt und dem Stahlabschnitt erheblich verbessert werden und der obere Bereich des Betonelements, insbesondere vor Staunässe, geschützt werden. Ebenso werden Bewehrungen und Ankerelemente, welche in dem Betonelement eingegossen sind, vor Korrosion geschützt. Weiterhin kann die Belastbarkeit des Betonelements hierdurch gesteigert werden.

Besonders vorteilhaft ist es, wenn das Stahlelement bei der Herstellung des Adapterstücks zumindest teilweise als Schalung für das innere Betonelement verwendet wird. Der Aufwand zur Herstellung einer derartigen Schalung kann hierdurch verringert werden, wobei je nach Ausführung auch das Entschalen erleichtert werden kann.

Die Belastbarkeit des Adapterstücks ist weiterhin verbessert, wenn das Gefüge des Betonelements an dem in Einbaulage oberen Ende des Betonelements die höchste Dichte aufweist, da die Krafteinleitung an einer Stelle mit einem besonders dichten Gefüge ohne Lufteinschlüsse erfolgt. Dies kann ebenfalls durch die erfindungsgemäße Herstellung des Adapterelements, welche um 180° gedreht erfolgt, gewährleistet werden.

Besonders vorteilhaft ist es weiterhin, dass das erfindungsgemäße Adapterstück, welches aus Stahl und aus Beton besteht, unabhängig von den Turmabschnitten hergestellt werden kann. Wird das Adapterstück als Fertigteil hergestellt, steht dieses zum gewünschten Zeitpunkt zur Verfügung und kann jederzeit, unabhängig vom Fertigungsverfahren und vom Fertigungsort, mit einem der beiden Turmabschnitte oder beiden Turmabschnitten verbunden werden.

Nach einer besonders vorteilhaften Weiterbildung der Erfindung weist das Stahlelement einen im Wesentlichen U-förmigen Querschnitt auf und umgreift einen oberen Bereich des Betonelements. Neben einer guten Abdichtung und einem Schutz der Bewehrungen kann hierdurch ein besonders belastbares Adapterstück hergestellt werden. Das Betonelement ist hierbei ringsum von dem Stahlelement umgeben, sodass ein dreiaxialer Spannungszustand in dem Betonelement erreicht werden kann.

Wird das Betonelement des Adapterstücks aus einem Hochleistungsbeton, insbesondere einem Beton mit einer Güte von C 50/60 oder größer gefertigt, so ist dieses zur Verbindung der beiden Turmabschnitte und zur Kraftaufnahme aus dem Turmabschnitt aus Stahl besonders gut geeignet. Insbesondere in Verbindung mit einem das Betonelement U-förmig umgreifenden Stahlelement kann bereits eine Betongüte von C 50/60 zum Einsatz kommen.

Vorteilhaft ist es weiterhin, wenn der Flansch des Adapterstücks vorzugsweise über seinen Außenumfang verteilt eine Vielzahl von Bohrungen aufweist, durch welche Befestigungsmittel zur Befestigung des Turmabschnitts aus Stahl hindurchführbar sind. Daneben ist es vorteilhaft, wenn der Flansch vorzugsweise über seinen Innenumfang verteilt eine Vielzahl von Öffnungen aufweist, durch welche Spannglieder zur Verspannung des Turmabschnitts aus Beton hindurchführbar sind und an der Oberseite des Flansches festlegbar sind. Der Flansch des Stahlelements dient somit neben dem Schutz des Betonelements samt Bewehrungen und der Krafteinleitung aus dem Stahlturm zugleich der Festlegung der Spannglieder und des Stahlturms.

In dem Betonelement sind vorzugsweise Hüllrohre eingegossen, durch welche die Spannglieder geführt werden und an dem Flansch des Stahlelements festlegbar sind. Das Adapterstück dient somit neben der Verbindung der beiden Turmabschnitte zugleich dem Aufbringen einer Vorspannung auf den Turmabschnitt aus Beton und der Verankerung der Spannglieder. Besonders vorteilhaft ist es hierbei, dass die Befestigung des Turmabschnitts aus Stahl unabhängig von der Verankerung der Spannglieder erfolgt, sodass Montage oder Demontage einzelner Elemente unabhängig voneinander möglich ist.

Besonders vorteilhaft ist es weiterhin, wenn in dem Betonelement des Adapterstücks eine Vielzahl von in Einbaulage vorzugsweise senkrecht orientierten Ankerbolzen eingegossen sind, an welchen der Turmabschnitt aus Stahl festlegbar ist. Die Krafteinleitung aus dem Stahlturm in das Adapterelement kann hierdurch in günstiger Weise erfolgen. Hierdurch wird in einfacher Weise die Befestigung des Turmabschnitts aus Stahl ermöglicht. Der Turmabschnitt aus Stahl kann hierbei direkt an den eingegossenen Ankerbolzen festgelegt werden oder über weitere Befestigungsmittel mit diesen verbunden werden.

Vorteilhaft ist es weiterhin, wenn die Ankerbolzen sich durch den Flansch des Stahlelements hindurch über die Oberseite des Flansches hinaus erstrecken. Zur Montage des Turmabschnitts aus Stahl muss dieser lediglich mit seinen entsprechenden Bohrungen auf dem Flansch platziert werden und kann beispielsweise mit Muttern festgelegt werden. Durch das Festlegen des Turmabschnitts aus Stahl mittels der Ankerbolzen kann zugleich in vorteilhafter Weise eine Vorspannung auf das Betonelement des Adapterstücks aufgebracht werden, so dass die Belastbarkeit des Adapterstücks weiter verbessert wird. Um das nachträgliche Verspannen zu ermöglichen, sind die Ankerbolzen mit einer Trennschicht versehen oder in einem Hüllrohr einbetoniert.

Nach einer besonders vorteilhaften Weiterbildung der Erfindung sind die Spannglieder ohne Ankerplatten direkt an dem Flansch des Stahlelements festlegbar. Durch die besonders gute Verbindung des Stahlflansches zu dem Betonelement kann der Stahlflansch direkt die Funktion der Lastverteilung übernehmen, sodass keinerlei zusätzliche Elemente erforderlich sind. Die Montage ist hierdurch weiter vereinfacht.

Eine vorteilhafte Ausführung der Erfindung sieht vor, dass zumindest eine untere Oberfläche des Adapterstücks nach Erhärten des Betons vorzugsweise parallel zu der in Einbaulage oberen Oberfläche des Flansches überfräst oder überschliffen wird. Die Parallelität der unteren Kontaktfläche des Adapterstücks zu der oberen Flanschfläche kann hierdurch in einfacher Weise gewährleistet werden. Eine Überarbeitung der oberen Flanschfläche des Stahlflansches vor oder nach dem Vergießen kann ebenfalls vorgesehen sein, um größtmögliche Parallelität und Ebenheit zu erreichen.

Bei einem Turm mit einem derartigen Adapterstück ist esweiterhin vorteilhaft, wenn der untere Turmabschnitt aus ringförmigen oder auch ringsegmentförmigen Betonfertigteilen ausgebildet ist. Die Herstellung des Turms ist hierdurch besonders einfach und flexibel, da die Betonfertigteile vollständig vorgefertigt werden können und erst am Montageort zusammengesetzt werden.

Vorzugsweise werden die Betonfertigteile trocken gegeneinander verspannt, so dass die Montage des Turmabschnitts aus Beton weiterhin vereinfacht ist. Eine Abdichtung der Fugen ist durch die hochwertige Ausführung der Kontaktflächen nicht erforderlich.

Zur Abdichtung einer horizontalen Kontaktfuge zwischen den Betonfertigteilen kann jedoch auch ein Dichtprofil vorgesehen sein. Die Betonfertigteile können hierzu eine Nut für das Dichtprofil aufweisen. Zusätzlich kann eine Abdichtung mittels eines Epoxydharzes erfolgen.

Besonders vorteilhaft ist es hierbei, wenn die Betonfertigteile mittels externer, im Inneren des Turms verlaufender Spannglieder verspannt sind. Wenigstens zwei Spannglieder erstrecken sich hierbei zwischen einem Fußabschnitt des Turms und dem oberen Adapterstück. Weitere Spannglieder können entweder ebenso zwischen dem Fuß des Turms und dem oberen Adapterstück oder auch nur bis über Teilhöhen des Turms verspannt werden. Beispielsweise kann sich jedes zweite Spannglied bis zu dem Adapterstück erstrecken, während die andere Hälfte der Spannglieder auf halber Höhe oder einer anderen Teilhöhe verankert wird.

Um auch bei dem Turmabschnitt aus Beton eine Parallelität der horizontalen Kontaktflächen der Betonfertigteile und somit eine einfache Montage vor Ort zu ermöglichen, wird jeweils zumindest eine der beiden horizontalen Kontaktflächen materialabtragend bearbeitet, beispielsweise überfräst oder überschliffen. Bei der Montage vor Ort müssen die einzelnen Betonfertigteile somit nur noch aufeinander gebracht werden, wobei keine weiteren Einstellarbeiten oder Ausgleichsarbeiten erforderlich sind. Zur Bearbeitung der horizontalen Kontaktflächen ist es besonders vorteilhaft, wenn beide horizontalen Kontaktflächen in einer Aufspannung bearbeitet werden. Die ringförmigen oder ringsegmentförmigen Betonfertigteile werden hierbei während der Bearbeitung um ihre eigene Achse gedreht. Gegebenenfalls kann vor dem Bearbeiten der Kontaktflächen auch eine Ausgleichsschicht, beispielsweise ein Epoxydharz auf die Kontaktflächen aufgetragen werden, um Unebenheiten auszugleichen.

Bestehen die ringförmigen Betonfertigteile aus zwei oder mehreren Ringsegmenten, so ist es weiterhin vorteilhaft, wenn auch vertikale Kontaktfugen zwischen den Kontaktflächen der ringsegmentförmigen Betonfertigteile trocken ausgeführt werden. Die Ringsegmente werden hierbei in horizontaler Richtung vorzugsweise mittels diagonal angeordneter Spannelemente, beispielsweise mittels Schrauben, vorgespannt. Die Fuge kann jedoch auch ohne Verschraubung ausgebildet werden, wobei die vertikale Fuge ausschließlich durch die vertikale Verspannung des Turmabschnitts aus Beton zusammengehalten wird. Die Ringsegmente eines Rings werden hierbei bei aufeinanderfolgenden Ringen jeweils gegeneinander verdreht angeordnet.

Nach einer anderen vorteilhaften Weiterbildung der Erfindung weisen die Betonfertigteile an ihren Kontaktflächen wenigstens eine Ausnehmung, vorzugsweise wenigstens eine Bohrung auf. In diese ist dann jeweils ein Element zur Lage- und/oder Verdrehsicherung, beispielsweise ein Kunststoffdübel einsetzbar. Vorzugsweise werden hierbei mehrere Bohrungen gleichmäßig über den Umfang verteilt.

Weitere Vorteile der Erfindung werden anhand der nachfolgend dargestellten Ausführungsbeispiele beschrieben. Es zeigen:
- **Fig. 1**: eine Übersichtsdarstellung eines erfindungsgemäßen Turms mit einem Betonabschnitt, einem Stahlabschnitt sowie einem Adapterstück,
- **Fig. 2**: eine perspektivische Darstellung eines erfindungsgemäßen Adapterstücks,
- **Fig. 3**: eine Schnittdarstellung eines erfindungsgemäßen Adapterstücks,
- **Fig. 4**: eine Darstellung eines ringförmigen Betonfertigteils für einen erfindungsgemäßen Turm, sowie
- **Fig. 5**: eine Schnittdarstellung eines erfindungsgemäßen Adapterstücks mit einer alternativen Befestigung des Turmabschnitts aus Stahl.

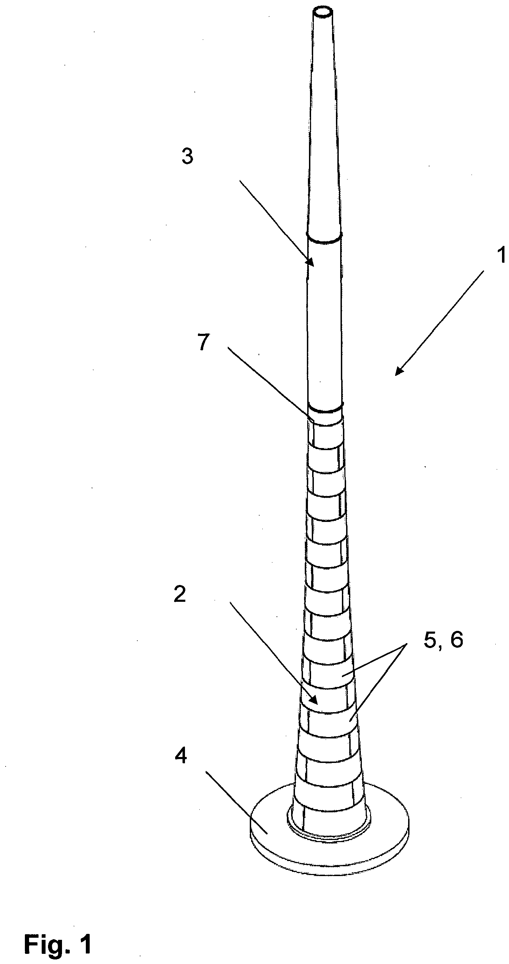

Fig. 1 zeigt einen Turm 1 beispielsweise für eine Windenergieanlage in einer perspektivischen Übersichtsdarstellung. Der Turm 1 ist als Hybridturm ausgeführt, bei welchem ein unterer rohrförmiger Turmabschnitt 2 aus Beton und ein oberer rohrförmiger Turmabschnitt 3 aus Stahl vorgesehen ist. Weiterhin weist der Turm 1 einen Fußabschnitt 4 bzw. ein Fundament auf. An dem Turmabschnitt aus Stahl 3 sind in an sich bekannter Weise eine Maschinengondel und ein Rotor angeordnet, welche hier nicht dargestellt sind.

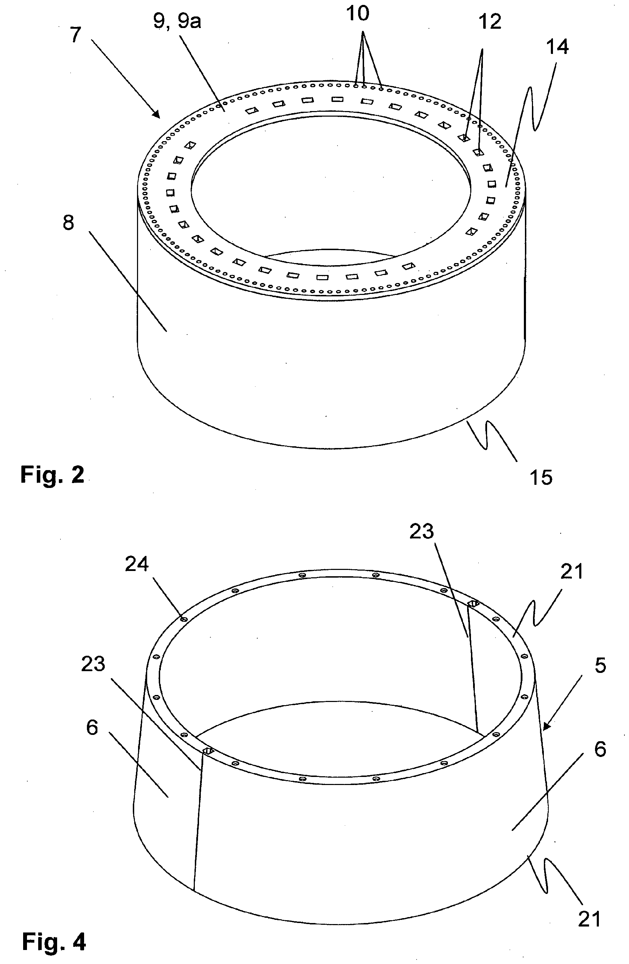

Der Turmabschnitt 2 aus Beton ist hierbei aus einzelnen, ringförmigen Betonfertigteilen 5 aufgebaut, welche vorliegend wiederum aus jeweils zwei Ringsegmenten 6 bestehen, wie aus Fig. 4 ersichtlich. Hierdurch können in günstiger Weise auch sehr große Türme, welche im Fußbereich einen sehr großen Durchmesser aufweisen, in Fertigteilbauweise hergestellt werden, da die einzelnen Fertigteile problemlos transportierbar sind. Der Turmabschnitt 3 aus Stahl kann einteilig vorgefertigt sein und an den Montageort verbracht werden oder ebenso aus mehreren Teilen bestehen, welche am Montageort, oder auch bereits zuvor, an einem Fertigungsort zusammengefügt werden. Um eine einfache und flexible Verbindung des Turmabschnitts 2 aus Beton und des Turmabschnitts 3 aus Stahl zu ermöglichen, ist ein Adapterstück 7 vorgesehen.

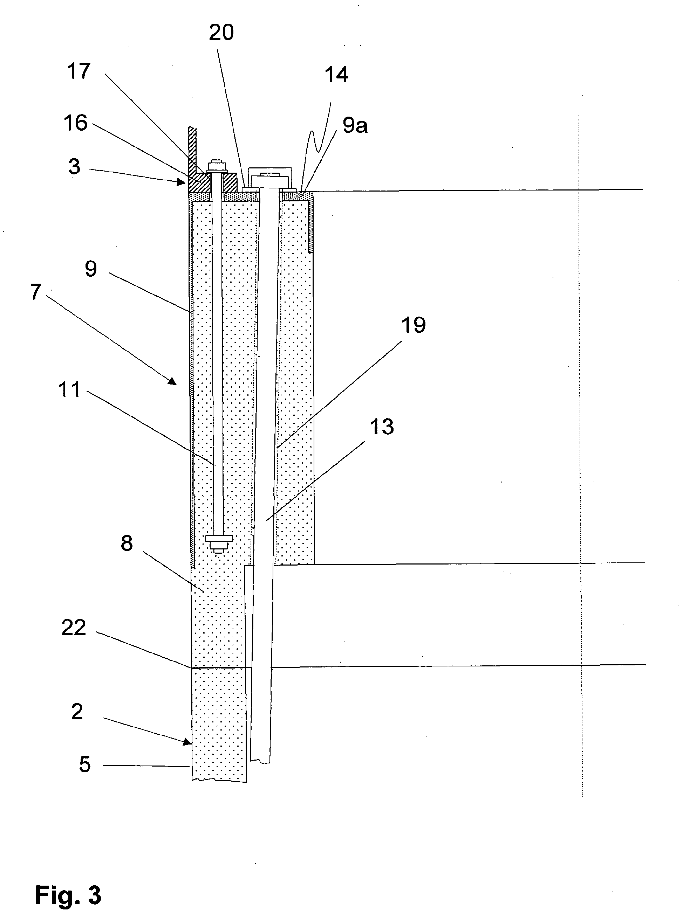

Das erfindungsgemäße Adapterstück 7 (Fig. 2) besteht aus einem ringförmigen Betonelement 8 und einem Stahlelement 9, welches vorliegend in Form eines ringförmigen Flansches 9a ausgebildet ist. Der Flansch 9a bedeckt, wie vorliegend ersichtlich, die in Einbaulage obere Oberfläche des Betonelements 8 vollständig, sodass dieses gut vor eindringender Nässe geschützt ist. Der Flansch 9a stellt somit eine Abdichtung zwischen dem Turmabschnitt 2 aus Beton, dem Turmabschnitt 3 aus Stahl dar. Das Stahlelement 9 weist vorliegend an seinem Außenumfang verteilt eine Vielzahl von Bohrungen 10 auf, durch welche Bolzen 11 (siehe Fig. 3) hindurchführbar sind, um den Turmabschnitt 3 aus Stahl daran festzulegen. Weiterhin weist das Stahlelement 9 am Innenumfang des Flansches 9a Öffnungen 12 auf, durch welche bei der Montage des Turms 1 Spannglieder 13 (siehe Fig. 3) hindurchführbar und an dem Flansch 9a festlegbar sind.

Das erfindungsgemäße Adapterstück 7 wird hergestellt, indem das Stahlelement 9 kopfüber, d. h. mit der späteren Oberseite 14 nach unten in eine ringförmige Schalung (hier nicht dargestellt) eingelegt wird. Anschließend wird Beton direkt auf die spätere Unterseite des Flansches 9a aufgebracht. Durch die Fertigung des Adapterstücks 7 um 180° zur späteren Einbaulage verdreht kann im später oben liegenden Kopfbereich des Betonelements 8 das Betonelement 8 mit einer besonders hohen Qualität hergestellt werden. Das Betonelement 8 weist somit in seinem Kopfbereich ein sehr dichtes Betongefüge mit einem geringen Anteil an Lufteinschlüssen auf. Durch das direkte Betonieren auf die spätere Unterseite des Flansches 9a kann der Flansch 9a vollständig untergossen werden, sodass die hochbelastete Kontaktfläche von hoher Qualität und im Wesentlichen ohne Lufteinschlüsse hergestellt ist. Vorteilhafterweise kann hierbei das Stahlelement 9 direkt einen Teil der Schalung (nicht dargestellt) bilden, vorliegend bildet der Flansch 9a eine Unterseite der Schalung. Das Adapterstück 7 kann nach dem Entschalen bis zur endgültigen Erstarrung des Betonelements 8 über Kopf gelagert bleiben, sodass der hochbelastete Kopfbereich des Adapterstückes in guter Qualität herstellbar ist. Nach dem Entschalen und Erhärten des Adapterstücks 7 wird die untere Oberfläche 15 des Adapterstücks 7 und gegebenenfalls die Oberseite 14 des Flansches 9a materialabtragend bearbeitet, um die Parallelität zu gewährleisten. Hierdurch sind bei der späteren Montage keinerlei Einstellarbeiten mehr erforderlich.

Das Adapterstück 7 kann durch die erfindungsgemäße Ausführung mit einem Betonelement 8 und einem Stahlelement 9 in günstiger Weise als Fertigteil hergestellt werden, sodass dieses völlig unabhängig von der Fertigung der Turmabschnitte 2 und 3 aus Beton und Stahl hergestellt werden kann. Mittels des erfindungsgemäßen Adapterstücks 7 ist es somit möglich, einen Turm 1 vollständig in Fertigteilbauweise oder auch ganz oder teilweise am Montageort herzustellen. Besonders vorteilhaft ist es hierbei, dass die Fertigung der Turmabschnitte 2 und 3 sowie das Adapterstück 7 zeitlich völlig unabhängig voneinander erfolgen kann. Die Flexibilität des Adapterstücks 7 und die Montagemöglichkeiten sind hierdurch erhöht. Das Adapterstück 7 ist somit auch für Off-Shore-Anlagen geeignet. Um bei einer Ausführung des Adapterstücks als Fertigteil einen Straßentransport zu ermöglichen, ist eine maximale Höhe des Adapterstücks von 3,80 m und ein Außendurchmesser von 3 - 8 m vorteilhaft. Ist ein Straßentransport nicht erforderlich, so kann das Adapterstück 7 in beliebigen Abmessungen hergestellt werden.

Fig. 3 zeigt eine weitere Ausführung eines erfindungsgemäßen Adapterstücks 7 in einer Schnittdarstellung. Im Gegensatz zur Darstellung der Fig. 2 beinhaltet das Adapterstück 7 ein inneres ringförmiges Betonelement 8 und ein.äußeres ringförmiges Stahlelement 9, welches an seinem in Einbaulage oberen Ende einen nach innen weisenden ringförmigen Flansch 9a aufweist. Besonders vorteilhaft ist es, wenn wie hier dargestellt, das Stahlelement 9 im Querschnitt im Wesentlichen U-förmig ausgebildet ist, sodass es den oberen Bereich des Betonelements 8 umgreift. Hierdurch kann eine besonders gute. Verbindung zwischen dem Betonelement 8 und dem Stahlelement 9 und eine besonders gute Belastbarkeit des Betonelements 8 hergestellt werden.

Wie weiterhin aus Fig. 3 ersichtlich, sind in dem Betonelement 8 des Adapterstücks 7 eine Vielzahl von vorliegend senkrecht orientierten Ankerbolzen 11 eingegossen. Vorliegend sind die Ankerbolzen 11 durch entsprechende Bohrungen 10 des Flansches 9a geführt und überragen die Oberseite 14 des Adapterstücks. Bei der späteren Montage des Turms 1 muss somit nur noch der Turmabschnitt 3 aus Stahl, welcher in seinem Fußbereich einen Befestigungsflansch 16 mit einer Vielzahl von über den Umfang verteilten Befestigungsbohrungen 17 aufweist, über die Ankerbolzen geführt werden und kann dann befestigt werden. Die Ankerbolzen 11 können mit einem Trennmittel versehen sein, so dass diese nicht direkt mit dem Betonelement 8 verbunden sind und wieder demontiert werden können. Hierdurch ist eine spätere Demontage des Turms 1 oder ein Austausch der Ankerbolzen 11 bei einer Wartung möglich. Ebenso können die Ankerbolzen 11 auch in einem Hüllrohr vergossen sein, um Demontage und Austausch zu ermöglichen.

Wie weiterhin in Fig. 3 ersichtlich, weist der Flansch 9a des Adapterstücks 7 eine Vielzahl von Öffnungen 12 zur Festlegung von Spanngliedern 13 auf. Weiterhin sind in dem Betonelement 8 des Adapterstücks 7 Hüllrohre 19 eingegossen, sodass eine nachträgliche Verspannung der Betonfertigteile 6 in günstiger Weise möglich ist. Die Spannglieder 13 werden hierzu durch die Hüllrohe 19 in dem Betonelement 8 und die Öffnungen 12 in dem Flansch 9a hindurchgeführt und an der Oberseite 14 des Flansches 9a festgelegt. Vorliegend sind die Spannglieder 13 ohne Ankerplatte direkt auf dem Flansch 9a festgelegt. Lediglich bei einem schrägen Verlauf der Spannglieder 13 wird, wie hier gezeigt, eine Keilplatte 20 untergelegt. Durch die erfindungsgemäße Ausgestaltung des Flansches 9a, welcher in besonders guter Weise mit dem Betonelement 8 verbunden ist, kann dieser zugleich die Funktion einer Lastverteilplatte übernehmen.

Das Adapterelement 7 weist an seinem in Einbaulage unteren Ende einen Rezess 21 auf, sodass die Spannglieder lediglich im Bereich des Adapterstücks 7 innerhalb der Wandung des Turms 1 geführt sind und sich ansonsten im Inneren des Turms außerhalb der Wandung bis zu dem Fußabschnitt 4 des Turms 1 erstrecken, wo sie ebenfalls verankert sind. Zur Führung der Spannglieder 13 kann es jedoch auch vorgesehen sein, diese in bestimmten Abständen entlang der Höhe des Turms mittels geeigneter Befestigungselemente oder Führungselemente zu befestigen oder zumindest zu führen. Anstelle der hier gezeigten Verspannung mittels externer Spannglieder 13 kann die Vorspannung auf den Turmabschnitt aus Beton 2 selbstverständlich auch mittels im Betonquerschnitt liegender Spannglieder 13 aufgebracht werden.

Die Betonfertigteile 5 des Turmabschnitts 2 aus Beton werden bei der Montage des Turmabschnitts 2 trocken aufeinandergesetzt und gegeneinander verspannt. Die Betonfertigteile 5 (siehe Fig. 4), welche vorliegend aus jeweils zwei Ringsegmenten 6 bestehen, weisen jeweils eine obere und eine untere horizontale Kontaktfläche 21 auf. Mindestens eine der Kontaktflächen 21 der Betonfertigteile 5 wird materialabtragend bearbeitet, d. h. überschliffen. Hierdurch ist es möglich, eine ebene Kontaktfläche 21 herzustellen, welche den einfachen Aufbau des Turmabschnitts 2 ohne aufwändige Einstellarbeiten ermöglicht. Weiterhin wird durch die Überarbeitung der Kontaktflächen 21 eine ebene und glatte Kontaktfläche 21 erreicht, sodass die Betonfertigteile 5 trocken verspannt werden können. Die Montage ist hierdurch vereinfacht und eine Demontage jederzeit möglich.

Bestehen die ringförmigen Betonfertigteile 5 aus zwei oder mehreren Ringsegmenten 6, wie vorliegend gezeigt, so sind in jedem Ring 5 des Turms 1 vertikale Kontaktfugen 23 vorhanden. Diese werden vorzugsweise ebenfalls trocken ausgeführt. Um die einzelnen Ringsegmente 6 gegeneinander zu fixieren, können im Bereich der vertikalen Kontaktfugen 23 diagonal angeordnete Verschraubungen (nicht dargestellt) vorgesehen werden. Eine Fixierung der Ringsegmente 6 zueinander kann jedoch auch allein durch die Vorspannkraft der Spannglieder 13 sowie einen Versatz der einzelnen Ringsegmente 6 in jedem Ring 5 erreicht werden. Vorliegend liegen die vertikalen Kontaktfugen 23 des folgenden Rings 5 jeweils um 90° versetzt (siehe Fig. 1).

Wie weiterhin in Fig. 4 gezeigt, können die Betonfertigteile 5, 6 an ihren Kontaktflächen 21 eine oder mehrere Ausnehmungen 24, vorliegend Bohrungen, aufweisen. In diese kann ein Dübel, beispielsweise aus Kunststoff, (nicht dargestellt) eingesetzt werden, der in das darüberliegende Betonfertigteil 5, 6 eingreift, sodass eine horizontale Verschiebung der Betonfertigteile 5, 6 oder Verdrehung verhindert wird. Anstelle eines Kunststoffdübels kann auch ein anderes Element zur Lage- oder Verdrehsicherung aus verschiedensten Materialien eingesetzt werden. Eine besonders gute Fixierung der einzelnen Betonfertigteile 5, 6 zueinander kann erreicht werden, wenn, wie vorliegend gezeigt, mehrere Dübel bzw. mehrere Ausnehmungen 24 über den Umfang des Betonfertigteils 5, 6 verteilt angeordnet sind.

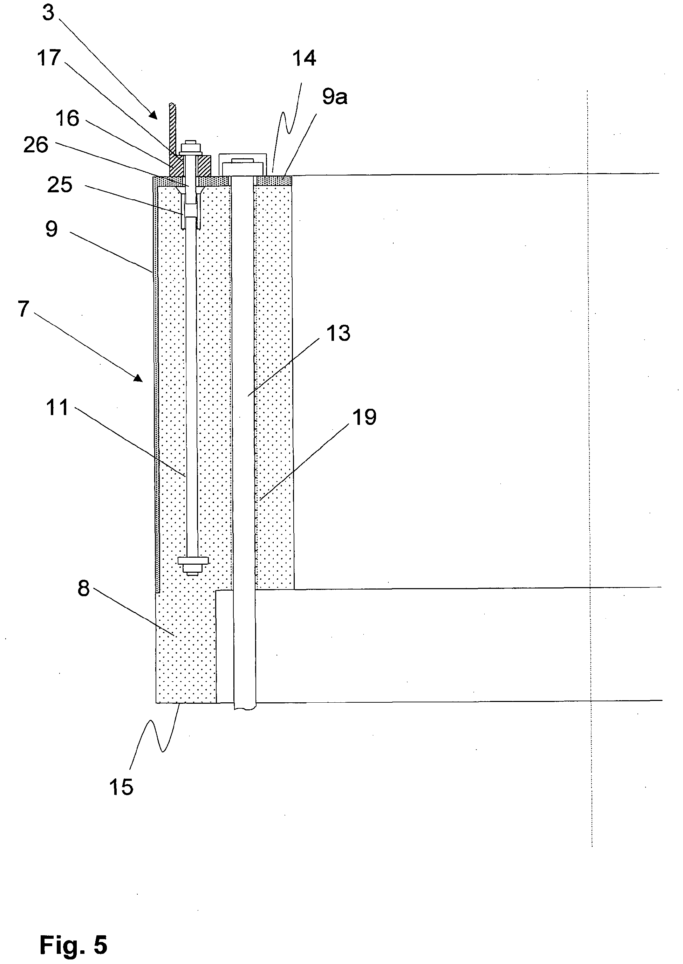

Fig. 5 zeigt eine alternative Ausführungsform eines Adapterstücks 7 zur Verbindung eines Turmabschnitts aus Beton 2 mit einem Turmabschnitt aus Stahl 3 in einer schematischen Schnittdarstellung. Im Gegensatz zur Darstellung der Fig. 3 erstrecken sich die in das Betonelement 8 des Adapterstücks 7 eingegossen Ankerbolzen 11 nicht über die Oberseite 14 des Adapterstücks hinaus, sondern enden knapp unterhalb der Oberseite 14. Weiterhin ist an der Oberseite 14 des Adapterstücks 7 bzw. des Betonelements 8 eine Gewindemuffe 25 eingegossen, welche mit dem eingegossenen Ankerbolzen 11 verschraubt ist. Die Gewindemuffe 25 ist vorliegend ebenfalls geschnitten dargestellt. Der Flansch 9a des Stahlelements 9 weist ebenso eine entsprechende Anzahl von Bohrungen 10 auf, durch welche weitere Befestigungsmittel 26 zur Befestigung des Turmabschnitts 3 aus Stahl hindurchführbar sind. Vorliegend erfolgt die Befestigung des Turmabschnitts 3 aus Stahl mittels mehrerer Gewindebolzen, welche durch den Befestigungsflansch 16 des Turmabschnitts aus Stahl 3 sowie den Flansch 9a hindurchführbar sind und anschließend in der eingegossenen Muffe 25 verschraubt werden. Das Adapterstück 7 kann hierdurch in besonders günstiger Weise hergestellt und transportiert werden, da keinerlei überstehende Teile vorhanden sind. Auch bei dieser Ausführung ist eine Demontage des Turmabschnitts aus Stahl 3 in einfacher Weise möglich. Um einen Austausch der eingegossenen Ankerbolzen 11 zu ermöglichen, können diese ebenfalls mit einem Trennmittel versehen werden oder in einem Hüllrohr eingegossen werden. Weiterhin können hierdurch in vorteilhafter Weise die Ankerbolzen 11 zugleich genutzt werden, um eine Vorspannung auf das Adapterstück 7 aufzubringen. Eine untere Ankerplatte und ggf. eine Befestigungsmutter sind hierbei fest in das Betonelement 8 einbetoniert.
Weiterhin ist in Figur 5 der Befestigungsflansch 16 des Turmabschnitts aus Stahl 3 im Durchmesser etwas kleiner als das Adapterstück 7 ausgeführt, so dass er nach innen versetzt auf dem Adapterstück 7 angeordnet ist. Hierdurch kann eine günstige Belastung des Betonelements 8 und eine verbesserte Aufnahme von Druckspannungen erreicht werden.

## Patentansprüche

1. Turm (1), insbesondere für eine Windenergieanlage, mit einem unteren rohrförmigen Turmabschnitt (2) aus Beton und einem oberen rohrförmigen Turmabschnitt (3) aus Stahl, sowie mit einem Adapterstück (7) zur Verbindung der beiden Turmabschnitte (2, 3), wobei das als Fertigteil ausgebildete Adapterstück (7) aus einem ringförmigen Betonelement (8) und einem Stahlelement (9) besteht, wobei das Stahlelement (9) zumindest einen ringförmigen Flansch (9a) beinhaltet, der eine in Einbaulage obere Oberfläche des Betonelements (8) vorzugsweise vollständig bedeckt, **dadurch gekennzeichnet, dass** das Stahlelement (9) mit dem Betonelement (8) direkt vergossen ist, wobei der Beton des Betonelements (8) durch Vergießen des Betonelements mit dem Stahlelement über Kopf direkt auf eine Unterseite des ringförmigen Flansches (9a) aufgebracht ist, so dass der ringförmige Flansch (9a) vollständig und im Wesentlichen ohne Lufteinschlüsse untergossen ist.

2. Turm nach dem vorhergehenden Anspruch, **dadurch gekennzeichnet, dass** das Adapterstück (7) ein inneres, ringförmiges Betonelement (8) und ein äußeres, ringförmiges Stahlelement (9) beinhaltet, welches an seinem in Einbaulage oberen Ende einen nach innen weisenden, ringförmigen Flansch (9a) aufweist, welcher die in Einbaulage obere Oberfläche des Betonelements (8) bedeckt.

3. Turm nach einem der vorhergehenden Ansprüche, **dadurch gekennzeichnet, dass** ein Gefüge des Betonelements (8) an dem in Einbaulage oberen Ende des Betonelements (8) die höchste Dichte aufweist.

4. Turm nach einem der vorhergehenden Ansprüche, **dadurch gekennzeichnet, dass** der Flansch (9a) vorzugsweise über seinen Außenumfang verteilt eine Vielzahl von Bohrungen (10) aufweist, durch welche Befestigungsmittel, vorzugsweise Ankerbolzen (11), zur Befestigung des Turmabschnitts (3) aus Stahl hindurchführbar sind.

5. Turm nach einem der vorhergehenden Ansprüche, **dadurch gekennzeichnet, dass** der Flansch (9a) vorzugsweise über seinen Innenumfang verteilt eine Vielzahl von Öffnungen (12) aufweist, durch welche Spannglieder (13) zur Verspannung des Turmabschnitts (2) aus Beton hindurchführbar sind und an der Oberseite (14) des Flansches (9a), vorzugsweise ohne Ankerplatten direkt an dem Flansch (9a) des Stahlelements (9), festlegbar sind.

6. Turm nach einem der vorhergehenden Ansprüche, **dadurch gekennzeichnet, dass** das Stahlelement (9) einen im wesentlichen U-förmigen Querschnitt aufweist und einen in Einbaulage oberen Bereich des Betonelements (8) umgreift.

7. Turm nach einem der vorhergehenden Ansprüche, **dadurch gekennzeichnet, dass** in dem Betonelement (8) des Adapterstücks (7) eine Vielzahl von in Einbaulage vorzugsweise senkrecht orientierten Ankerbolzen (11) eingegossen sind, an welchen der Turmabschnitt (3) aus Stahl festlegbar ist, wobei die Ankerbolzen (11) sich durch den Flansch (9a) des Stahlelements (9) hindurch über die Oberseite (14) des Flansches (9a) hinaus erstrecken.

8. Turm nach einem der vorhergehenden Ansprüche, **dadurch gekennzeichnet, dass** zumindest eine in Einbaulage untere Oberfläche (15) des Adapterstücks (7) überfräst oder überschliffen ist.

9. Turm nach einem der vorhergehenden Ansprüche, **dadurch gekennzeichnet, dass** das Betonelement (8) des Adapterstücks (7) aus einem Hochleistungsbeton, insbesondere aus einem Beton mit einer Güte von C 50/60 oder größer, besteht.

10. Turm (1) nach einem der vorhergehenden Ansprüche, **dadurch gekennzeichnet, dass** der untere Turmabschnitt (2) aus ringförmigen Betonfertigteilen (5) ausgebildet ist, welche trocken gegeneinander verspannt sind.

11. Turm nach einem der vorhergehenden Ansprüche, **dadurch gekennzeichnet, dass** der untere Turmabschnitt (2) aus ringförmigen Betonfertigteilen (5) ausgebildet ist, welche mittels externer, im Inneren des Turmes (1) verlaufender Spannglieder (13) verspannt sind, wobei sich wenigstens zwei Spannglieder (13) zwischen einem Fußabschnitt (4) des Turms (1) und dem Adapterstück (7) erstrecken.

12. Turm nach einem der vorhergehenden Ansprüche, **dadurch gekennzeichnet, dass** eine horizontale Kontaktfuge (22) zwischen den ringförmigen Betonfertigteilen (5) mittels eines Dichtprofils abgedichtet ist, wobei die Betonfertigteile (5) eine Nut für das Dichtprofil aufweisen.

13. Turm nach einem der vorhergehenden Ansprüche, **dadurch gekennzeichnet, dass** die ringförmigen Betonfertigteile (5) aus zwei oder mehreren Ringsegmenten (6) bestehen, wobei eine vertikale Kontaktfuge (23) zwischen Kontaktflächen der Ringsegmente (6) trocken ausgeführt ist.

14. Turm nach einem der vorhergehenden Ansprüche, **dadurch gekennzeichnet, dass** die Ringsegmente (6) in horizontaler Richtung mittels diagonal angeordneter Spannelemente, vorzugsweise Schrauben, vorgespannt sind.

15. Turm nach einem der vorhergehenden Ansprüche, **dadurch gekennzeichnet, dass** die Betonfertigteile (5) an ihren Kontaktflächen wenigstens eine Ausnehmung (24), vorzugsweise wenigstens eine Bohrung aufweisen, in welche ein Element zur Lage- und/oder Verdrehsicherung, vorzugsweise ein Kunststoffdübel, einsetzbar ist.

16. Verfahren zur Herstellung eines Turms (1), insbesondere für eine Windenergieanlage, bei welchem ein unterer Turmabschnitt (2) aus Beton und ein oberer Turmabschnitt (3) aus Stahl mit einem Adapterstück (7) verbunden werden, wobei das Adapterstück (7) unabhängig von der Herstellung der Turmabschnitte als Fertigteil hergestellt wird, wobei zur Herstellung des Adapterstücks (7) ein Stahlelement (9) vorgesehen wird, welches zumindest einen ringförmigen Flansch (9a) beinhaltet, **dadurch gekennzeichnet, dass** das Stahlelement (9) kopfüber in eine ringförmige Schalung eingelegt wird und anschließend Beton in die Schalung eingebracht wird, um ein ringförmiges Betonelement (8) des Adapterstücks (7) herzustellen, wobei der Beton direkt auf die spätere Unterseite des Flansches (9a) aufgebracht wird.

17. Verfahren nach dem vorhergehenden Anspruch, **dadurch gekennzeichnet, dass** das Stahlelement (9) zumindest teilweise als Schalung für das innere Betonelement (8) verwendet wird.

18. Verfahren nach einem der beiden vorhergehenden Ansprüche,
**dadurch gekennzeichnet, dass** zumindest eine in Einbaulage untere Oberfläche (15) des Adapterstücks (7) nach Erhärten des Betons vorzugsweise parallel zu der in Einbaulage oberen Oberfläche (14) des Flansches (9a) überfräst oder überschliffen wird.

19. Verfahren nach einem der Ansprüche 16 - 18, **dadurch gekennzeichnet, dass** der untere Turmabschnitt (2) aus ringförmigen Betonfertigteilen (5) hergestellt wird, wobei jeweils zumindest eine der horizontalen Kontaktflächen (21) der Betonfertigteile (5) materialabtragend bearbeitet, vorzugsweise überfräst oder überschliffen, wird, und dass die Betonfertigteile bei der Montage des Turms (1) trocken gegeneinander verspannt werden.

## Claims

1. Tower (1), especially for a wind power plant, with a lower tubular tower section (2) made of concrete and an upper tubular tower section (3) made of steel, as well as an adapter piece (7) for connecting the two tower sections (2, 3), wherein the adapter piece (7), which is executed as a prefabricated part, consists of an annular concrete element (8) and of a steel element (9), wherein the steel element (9) contains at least one annular flange (9a) that preferably fully covers an upper surface of the concrete element (8) in installed position, **characterized in that** the steel element (9) is directly cast with the concrete element (8), wherein the concrete of the concrete element (8) is applied headlong directly onto an underside of the annular flange (9a) by casting the concrete element with the steel element so that the annular flange (9a) is fully grouted and largely without air inclusions.

2. Tower according to the preceding claim, **characterized in that** the adapter piece (7) contains an inner annular concrete element (8) and an outer annular steel element (9), which in its upper end in installation position has an annular flange (9a) pointing inwards that covers the upper surface of the concrete element (8) in installation position.

3. Tower according to one of the preceding claims, **characterized in that** a micro-structure of the concrete element (8) has the highest density on the upper end of the concrete element (8) in installation position.

4. Tower according to one of the preceding claims, **characterized in that** the flange (9a) has preferably over its external circumference numerous bore holes (10), through which fastening elements, preferably anchoring bolts (11) can be inserted for fixing the tower section (3) made of steel in place.

5. Tower according to one the preceding claims, **characterized in that** the flange (9a) has numerous openings (12) preferably distributed over its inner circumference through which pre-stressing tendons (13) for bracing the tower section (2) made of concrete can be inserted and can be fastened on the upper side (14) of the flange (9a) preferably without anchoring plates directly on the flange (9a) the steel element (9).

6. Tower according to one of the preceding claims, **characterized in that** the steel element (9) has a largely U-shaped cross-section and encompasses an upper area of the concrete element (8) in installation position.

7. Tower according to one of the preceding claims, **characterized in that** numerous anchoring bolts (11) - preferably oriented perpendicularly in installed position - are grouted in the concrete element (8) of the adapter piece (7) on which the tower section (3) made of steel can be fixed in place, wherein the anchoring bolts (11) protrude through the flange (9a) of the steel element (9) over the upper side (14) of the flange (9a).

8. Tower according to one of the preceding claims, **characterized in that** at least one lower surface (15) of the adapter piece (7) in installation position is smoothed or milled.

9. Tower according to one of the preceding claims, **characterized in that** the concrete element (8) of the adapter piece (7) is made of high-performance concrete, especially of concrete of C 50/60 or higher quality.

10. Tower (1) according to one of the preceding claims, **characterized in that** the lower tower section (2) is executed from annular prefabricated concrete parts (5), which are braced dry against one another.

11. Tower according to one of the preceding claims, **characterized in that** the lower tower section (2) is made of annular prefabricated concrete parts (5) which are braced with the help of external pre-stressing tendons (13) running inside the tower (1), in which case at least two pre-stressing tendons (13) extend between one foot section (4) of the tower (1) and the adapter piece (7).

12. Tower according to one of the preceding claims, **characterized in that** a horizontal contact joint (22) is sealed between the annular prefabricated concrete parts (5) by means of a sealing profile, wherein the prefabricated concrete parts (5) have a groove for the sealing profile.

13. Tower according to one of the preceding claims, **characterized in that** the annular prefabricated concrete parts (5) consist of two or several ring segments (6), in which case a vertical contact joint (23) is executed dry between the contact surfaces of the ring segments (6).

14. Tower according to one of the preceding claims, **characterized in that** the ring segments (6) are pre-stressed in horizontal direction by means of diagonally arranged tensioning elements, preferably screws.

15. Tower according to one of the preceding claims, **characterized in that** the prefabricated concrete parts (5) have on their contact surfaces at least one recess (24), preferably at least one bore hole, in which an element for securing the position and preventing torsion, preferably a plastic dowel, can be inserted.

16. Method for building a tower (1), especially for a wind power plant, in which a lower tower section (2) made of concrete and an upper tower section (3) made of steel are connected with an adapter piece (7), wherein the adapter piece (7), is made as prefabricated part independently from the manufacturing of the tower sections wherein for the manufacturing of the adapter piece (7) a steel element (9) is provided that has at least one annular flange (9a), **characterized in that** the steel element (9) is inserted headlong in an annular formwork and afterwards concrete is placed in the formwork in order to make an annular concrete element (8) of the adapter piece (7), in which case the concrete is directly applied on the later underside of the flange (9a).

17. Method according to the preceding claim, **characterized in that** the steel element (9) is at least partially utilized as formwork for the inner concrete element (8).

18. Method according to one of the two preceding claims, **characterized in that** at least one lower surface (15) of the adapter piece (7) in installation position is smoothed or milled after the concrete has hardened, preferably parallel to the upper surface (14) of the flange (9a) in installation position.

19. Method according to one of the preceding claims 16 to 18, **characterized in that** the lower tower section (2) is made of annular prefabricated concrete parts (5), wherein in each case at least one of the horizontal contact surfaces (21) of the prefabricated concrete parts (5) is processed for removing material, preferably smoothed or milled, and that prefabricated concrete parts are braced dry against one another while the tower (1) is being assembled.

## Revendications

1. Tour (1), en particulier pour une éolienne, avec une section de tour (2) inférieure tubulaire en béton et une section de tour (3) supérieure en acier, ainsi qu'avec une pièce d'adaptation (7) pour la connexion des deux sections (2, 3) de tour, dans laquelle la pièce d'adaptation (7) se présentant sous la forme d'un élément préfabriqué se compose d'un élément en béton (8) annulaire et d'un élément en acier (9), dans laquelle l'élément en acier (9) comporte au moins une bride annulaire (9a), qui recouvre de préférence entièrement une surface de l'élément en béton (8) supérieure dans la position de montage, **caractérisée en ce que** l'élément en acier (9) est scellé par coulage directement avec l'élément en béton (8), sachant que le béton de l'élément en béton (8), lors du scellement par coulage de l'élément en béton avec l'élément en acier, est appliqué directement par le haut sur une face inférieure de la bride annulaire (9a) de sorte que le coulage s'effectue complètement sous la bride annulaire (9a) et substantiellement sans inclusion d'air.

2. Tour selon la revendication précédente, **caractérisée en ce que** la pièce d'adaptation (7) contient un élément en béton (8) intérieur annulaire et un élément en acier (9) annulaire extérieur, lequel, dans la position de montage, comporte à son extrémité supérieure une bride annulaire (9a) orientée vers l'intérieur, laquelle recouvre la surface de l'élément en béton (8) supérieure dans la position de montage.

3. Tour selon l'une des revendications précédentes, **caractérisée en ce qu'**une structure de l'élément en béton (8) présente la plus haute densité à l'extrémité supérieure dans la position de montage de l'élément en béton (8).

4. Tour selon l'une des revendications précédentes, **caractérisée en ce que** la bride (9a) comporte une multitude d'alésages (10) répartis de préférence sur sa circonférence extérieure, à travers lesquels peuvent être introduits des moyens de fixation, de préférence des boulons d'ancrage (11), pour la fixation de la section de tour (3) en acier.

5. Tour selon l'une des revendications précédentes, **caractérisée en ce que** la bride (9a) comporte une multitude d'ouvertures (12) réparties de préférence sur sa circonférence intérieure, à travers lesquelles des membres de précontrainte (13) pour la mise sous contrainte de la section de tour (2) en béton peuvent être introduits et fixés sur la face supérieure (14) de la bride (9a), de préférence sans plaque d'ancrage, directement sur la bride (9a) de l'élément en acier (9).

6. Tour selon l'une des revendications précédentes, **caractérisée en ce que** l'élément en acier (9) présente une section transversale substantiellement en U et encercle une partie de l'élément en béton (8) supérieure dans la position de montage.

7. Tour selon l'une des revendications précédentes, caractérisée en ce qu'une multitude de boulons d'ancrage (11) orientés de préférence verticalement dans la position de montage sont coulés dans l'élément en béton (8) de la pièce d'adaptation (7), auxquels peut être fixée la section de tour (3) en acier, sachant que les boulons d'ancrage (11) s'étendent à travers la bride (9a) de l'élément en acier (9) au-delà de la face supérieure (14) de la bride (9a).

8. Tour selon l'une des revendications précédentes, caractérisée en ce qu'au moins une face (15) de la pièce d'adaptation (7) inférieure dans la position de montage est fraisée ou meulée.

9. Tour selon l'une des revendications précédentes, **caractérisée en ce que** l'élément en béton (8) de la pièce d'adaptation (7) se compose d'un béton à hautes performances, en particulier d'un béton d'une qualité de C 50/60 ou supérieure.

10. Tour (1) selon l'une des revendications précédentes, **caractérisée en ce que** la section de tour (2) inférieure se compose d'éléments préfabriqués en béton (5) annulaires, qui sont contreventés à l'état sec les uns contre les autres.

11. Tour selon l'une des revendications précédentes, **caractérisée en ce que** la section de tour (2) inférieure se compose d'éléments préfabriqués en béton (5) annulaires, qui sont contreventés à l'aide de membres de précontrainte (13) externes s'étendant à l'intérieur de la tour (1), sachant que deux au moins des membres de précontrainte (13) s'étendant entre une partie de pied (4) de la tour (1) et la pièce d'adaptation (7).

12. Tour selon l'une des revendications précédentes, caractérisée en ce qu'un joint de contact horizontal (22) est étanché entre les éléments (5) préfabriqués en béton annulaires au moyen d'un profilé d'étanchement, sachant que les éléments (5) préfabriqués en béton comportent une rainure pour le profilé d'étanchement.

13. Tour selon l'une des revendications précédentes, **caractérisée en ce que** les éléments (5) préfabriqués en béton annulaires se composent de deux ou d'une multitude de segments annulaires (6), sachant qu'un joint de contact (23) vertical est exécuté sec entre les faces de contact des segments annulaires (6).

14. Tour selon l'une des revendications précédentes, **caractérisée en ce que** les segments annulaires (6) sont précontraints dans le sens horizontal à l'aide d'éléments de serrage disposés diagonalement, de préférence des vis.

15. Tour selon l'une des revendications précédentes, **caractérisée en ce que** les éléments (5) préfabriqués en béton, sur leurs surfaces de contact, présentent au moins une entaille (24), de préférence au moins un alésage, dans lequel peut être inséré un élément en tant que moyen de fixation de la position et/ou moyen anti-rotation, de préférence une cheville en matière plastique.

16. Procédé pour fabriquer une tour (1), en particulier pour une éolienne, dans lequel une section de tour (2) inférieure en béton et une section de tour (3) en acier sont connectés via une pièce d'adaptation (7), dans lequel la pièce d'adaptation (7) est fabriquée en tant qu'élément préfabriqué indépendamment de la fabrication des sections de tour, dans lequel, pour la fabrication de la pièce d'adaptation (7), il est prévu un élément en acier (9), qui comporte au moins une bride (9a) annulaire, **caractérisé en ce que** l'élément en acier (9) est inséré par la tête dans un coffrage annulaire et du béton est ensuite coulé dans le coffrage afin de fabriquer un élément en béton (8) de la pièce d'adaptation (7), sachant que le béton est appliqué directement sur la future face inférieure de la bride (9a).

17. Procédé selon la revendication précédente, **caractérisé en ce que** l'élément en acier (9) est au moins partiellement utilisé en tant que coffrage pour l'élément en béton (8) intérieur.

18. Procédé selon l'une des deux revendications précédentes, caractérisé en ce qu'au moins une face (15) de la pièce d'adaptation (7) inférieure dans la position de montage est fraisée ou meulée après le durcissement du béton, de préférence parallèlement à la face (14) de la bride (9a) supérieure dans la position de montage.

19. Procédé selon l'une des revendications 16-18, **caractérisé en ce que** la section de tour (2) inférieure est fabriquée à partir d'éléments (5) préfabriqués en béton annulaires, sachant que respectivement au moins l'une des faces de contact (21) horizontales des éléments (5) préfabriqués en béton est usinée par enlèvement de matière, de préférence fraisée ou meulée, et que les éléments préfabriqués en béton sont contreventés à sec les uns contre les autres dans la construction de la tour (1).
